# EUROPEAN PATENT APPLICATION

(11) **EP 2 837 284 A1**
(43) Date of publication of application: **18.02.2015**
(21) Application number: 14180152.2
(22) Date of filing: 07.08.2014
(51) Int. Cl.: A01K 61/00, A01K 63/00

(54) **Method and device for detaching parasites that adhere to the skin of the fish**

(30) Priority: 13.08.2013 CL 2013002345
(71) Applicant: Grupo Marco S.p.A., Santiago (CL)
(72) Inventor: Ziller Vergara, Robert, Santiago (CL)
(74) Representative: Oficina Ponti, SLP

(57) **Abstract**

Method for detaching parasites that adhere to the skin of fish that comprises: a) generating electric currents through an electric device (4); b) sparsely distributing such reflectors (2b, 2b') in a dielectric device (2, 2'); c) emitting electromagnetic pulse fields in a dielectric device (2, 2') using a set of reflectors (2b, 2b'); d) allowing the flow of fish in a fluid medium to the interior of such device (2) from an entryway (1) to an exit way (3); and e) exposing the fish that transit through the interior of such device (2) to the electromagnetic pulse fields that are generating by the network of reflectors (2b) in order for the electromagnetic pulses to make contact with the parasites that are adhered to the skin and surface of the fish and result in the detachment of the parasites. Device based on the emission of electromagnetic pulses and use for detaching Caligus (*Caligus Rogercresseyi*) and or the *Lepeophtheirusn* type parasites that adhere to the salmon species.

## Description

The present invention relates to a method and device for the removal of parasites that adhere to the skin of fish.

The invention focuses specifically on aquiculture fish farms with net pens that suffer damage due to adhesion of parasites on their skin.

### BACKGROUND OF THE INVENTION

Fish located in aquiculture farms are especially susceptible to the adhesion of parasites, causing detrimental effects on the fish, and, consequently, on the economic results of the aquiculture business.

One of the parasites affecting fish in the Chilean salmon aquiculture industry is a copepod from the *Caligidae* family, generically called *Caligus Rogercresseyi,* or *Caligus.*

Caligidosis is a disease caused by the Caligus, commonly known as sea lice, that corresponds to an ectoparasite copepod that inhabits Chilean waters and infects the salmon farms. This disease generates economic losses because of the increase in the susceptibility of secondary infections, the costs of treatment, the extension of the farming cycle due to the decrease in the feed conversion efficiency and skin cleaning during the salmon processing stage.

In 2007, the Chilean National Fishing and Aquiculture Service (SERNAPESCA) declared Caligidosis as a "High Risk" disease, meaning that it would be considered an important disease present in the country and that it would be subjected to sanitary surveillance and control programs.

In 2012 SERNAPESCA established a specific sanitary surveillance and control program for Caligidosis through the Exempt Resolution N° 1,141 of May 18^{th}, 2012. The main objective of the resolution is to establish integrated control over Caligidosis through its early diagnosis, the decrease of parasitic density, and control over its dissemination.

The methods, systems and conventional devices that currently exist to treat the parasites found on the fish include:

### Chemical agents administered orally

The application US 2010/0311759 A1 issued by Nippon Suisan Kaisha, Ltd., published on December 9^{th} 2010 and titled "antiparasitic agent for fish and method of controlling proliferation of fish parasites" refers to an antiparasitic agent for fish that contains an inhibitor of foic acid (folate) synthesis and/or an inhibitor of the folate activation like the active substance(s). Through this oral administration, the antiparasitic agent is able to eliminate the parasite in fish, particularly the parasites that pertain to the ciliated group of fish parasites.

The application CL 349-2008 from Centro Veterinario y Agrícola Ltda. (Veterinarian and Agricultural Center Ltd.) published on February 13^{th} 2009, involves a formulation to combat the Caligus SSP infection in fish and contains an organic acid in proportion to or greater than 10% of the formulation.

### Chemical and thermal baths

The CL 3502-2012 application by OCEA AS, published on the 31^{st} of May of 2013, introduces a lice treatment system for marine organisms, such as fish. It is a closed system that comprises: an entrance for the fish to be treated; a first divider after the entryway to separate the fish from the water; a pipeline to transport the fish, where, at least, one part of the pipeline involves a liquid bath; a second divider to separate the fish from the liquid treatment; an exit after the second divider for unloading the treated fish; and a circulation pump for the flow of the treatment liquid in the closed system, where the liquid bath tubing is arranged in a U-shape.

The US 5,355,838 patent by Eka Nobel AB, published on the 18^{th} of October of 1994, titled "methods for removing parasites" refers to the prevention of parasites in transmitted fish by the spread to a waterway or a waterway of limited area without parasites. According to this invention, all fish are conducted to a zone where they are required to pass through a water bath that contains a substance that kills or removes the parasites from the fish with the objective of preventing the spread of the disease without killing or seriously injuring the fish. The invention also refers to a plant in order to carry out this method.

### Lighting devices

The US 2013/0050465 A1 application from Esben Beck, published on February 28^{th}, 2013, titled "method and device for destroying parasites on fish" refers to a device for the destruction of parasites on fish, such as sea lice in farmed salmon. This device involves a camera that communicates with a controlling unit, which in turn, communicates with a light source adapted to fire pulses of point shaped light that is harmful for the parasites. The controlling unit controls a system for optical recognition within a defined coordinate system and is arranged to detect points and to update in real time, coordinates that exhibit contrast differences typical to parasites on a fish surface and to trigger a light pulse from the light source when the coordinates for a detected point coincides with the coordinates for the aiming point of the light source.

### Cavitational devices

The WO 97/27744 application by Ferranti-Thomson Sonar System U.K. Limited, published on August 7^{th}, 1997 and titled "method and apparatus for reducing parasite infestation or damage to aquatic creatures" is a method for reducing parasite infection or damage to aquatic creatures. It includes the means for generating transitional cavitational events in the medium surrounding the creatures so as to produce biological changes that affect their development cycle and life expectancy. In the case of the treatment of fish, suitable apparatus may, according to one embodiment, comprise an array of transducers located around a circle so as to define a treatment zone and driven by a drive circuit to produce high-energy intensities in the water. A trigger device may be used to detect the presence of the fish and may also be used to count the fish. Other, more static, aquatic creatures may be treated by moving the apparatus relative to the creatures so that the creatures pass through the treatment zone of the apparatus.

### Ultrasonic devices

The WO 2013/051725 A1 application by Ihi Corporation, published on the 11^{th} of April of 2013 and titled "sanitation management method of farmed fish and device thereof" involves ultrasonic oscillation terminals that are installed in a fish tank. The ultrasonic waves are generated in the fish tank, and body surface parasites on the farmed fish in the fish tank are removed.

### Prior art on current parasite control measures

Currently, the most commonly used process in the Chilean salmon aquiculture industry for the control of Caligus is the "chemical bath". There have been other procedures tested in the industry, but they have been ineffective or have caused too many secondary negative side effects to be implemented as a standard industry process.

### Chemical baths

The chemical baths that are currently being used consist in diffusing chemicals in the sea pens where the Caligus infected salmon are found. The pens are manufactured with nets that in normal circumstances allow the flow of seawater, which is necessary in order to renew the water inside of the pens where the salmon is found. As a measure to reduce the environmental damages, there are governmental requirements to install a canvas around the pens in order to reduce the amount of chemicals that spill into the ocean.

Although chemical baths are the commonly used procedure, the process has various negative factors, which include:
➢ Ecological damages: The spread of drugs into the ocean including Deltamethrin, Emamectin Benzoate, Cypermethrin, Diflubenzuron and Hydrogen Peroxide, is not only harmful for the Caligus, but to for other species of marine life including various micro organisms. The introduction of drugs containing pesticide into to the ocean results in an alteration of the balance of the marine ecosystem.
➢ Altering Caligus antibodies: As a defense mechanism, parasites generate a resistance to therapeutic drugs in order to evade their control. Over time, it is inevitable that the parasite builds different degrees of drug resistance.
➢ Stress in fish: During the chemical bath treatment, the fish have a tendency to approach the surface, producing agitation and frequency of jumping from one side to another, causing stress and sometimes death. Stress factors lead to an increment in the production of the cortisol hormone in fish, affecting their immune system and making them more susceptible to catching other diseases.

### Thermal bath:

The thermal bath procedure has been tested in the industry but is not commonly being used. Fundamentally, the thermal bath involves putting the fish through a hydraulic closed circuit of water at a temperature of 30°C. This process is not commonly used because of its negative consequences, which include:
➢ Fish fatality: The method exposes salmon to temperatures of 30°C to later return them to the sea that has a temperature of approximately 10°C. This 20°C change in temperature significantly affects a certain percentage of fish resulting in their death.
➢ Stress of fish: The change in temperature that the fish experience from being submitted to temperatures of 30°C, which is 20°C more than normal, and later being returned to waters of approximately 10°C, results in a significant amount of stress. Stressed fish are more susceptible to becoming infected.

### DESCRIPTION OF THE INVENTION

One of the objectives of the present invention is to overcome the complications previously mentioned, by providing a method and a device that emits electromagnetic pulses that causes the parasites to detach without causing harm to the fish nor contaminating the environment. The method of the present invention has comparative advantages due to the fact that:
1. It does not cause ecological harm: The proposed method does not use chemicals nor does it emit any harmful substance into the environment.
2. It does not alter parasite antibodies, particularly against the Caligus: The suggested method does not use drugs that can create Caligus resistance.
3. It does not cause the fish to stress: the proposed method uses electromagnetic pulses at a width and frequency that removes the parasites without affecting or altering the level of stress of the fish.
4. It does not cause fish fatality: the proposed method uses electromagnetic pulses that remove the parasite without killing the fish.

Other methods or systems that are currently being used to eliminate parasites that adhere to fish cause damage and contaminate the environment. Furthermore, they cause stress and mortality in fish, producing negative economic impacts on the aquiculture business.

Some of the objectives of the present invention include detaching parasites that adhere to the skin of fish without harming the environment as well as being able to minimize the stress and mortality of the fish during the process.

The present invention corresponds to a method to remove parasites from the surface of fish, specifically the marine parasites from the *Caligus* and *Lepeophtheirus* species, which adhere to the skin of fish, particularly to the salmon and trout species of the Salmonidae family. The method comprises generating electromagnetic fields on fish affected by parasites.

The method is characterized in that it comprises the steps of:
a. Generating pulsating electric currents using an electronic device;
b. Transmitting the pulsating electric currents towards a set of reflectors;
c. Sparsely distributing the reflectors in a cleansing device;
d. Spreading electromagnetic pulse fields in the interior of the cleansing device with a set of reflectors;
e. Allowing the transfer of fish in a fluid medium to the interior of the cleansing device from a fish/water entrance to a fish/water exit; and
f. Exposing the fish that transit through the interior of the cleansing device to the electromagnetic pulses emitted by the set of reflectors in order for the electromagnetic pulses to act upon the parasites adhered to the skin and surface of the fish and generate the detachment of the parasites from the fish.

Preferably, the method comprises the step of controlling the spread of electromagnetic pulse fields by programming its width and frequency. Advantageously, the width of the electromagnetic pulses is in a range from 0 to 10 seconds and/or the frequency of the electromagnetic pulses is in a range between 0 and 1,000 Hertz or greater.

According to an embodiment, the width of the electromagnetic pulse fields is in a range from 0 to 0.05 second and/or the frequency of the electromagnetic pulses is in a range between 300 and 900 Hertz.

Advantageously, the method comprises the step of adjusting the width and/or frequency of the electromagnetic pulses in a programmed manner and directed to the Caligus type parasites (*Caligus Rogercreseyi*) and/or the *Lepeophtheirus* type parasites that adheres to the salmon species.

Preferably, the method comprises the step of energizing the electromagnetic pulse fields in the set of reflectors using a connection medium which is connected to an electronic device and also energizing the electromagnetic pulse fields in the additional set of reflectors through an additional connection means connected to the electronic device.

Advantageously, said electronic device is fed by an external power source.

Preferably, the method comprises the step of releasing through a ventilation zone the buildup of air (airbag) that sets inside the cleansing device and also allowing additional water to enter the cleansing device to guarantee that the interior of the device is full of water.

Advantageously, the method comprises the step of collecting the detached parasites using a tool that allows to separate the incoming water using a drain with water exit channels.

According to an embodiment, the method comprises the step of draining the incoming water in one or more stages as well as the step of supplying of water through a sprinkler system.

Preferably, the draining step comprises the step of passing water through a cleaning box, which contains water exit channels, and the step of supplying of water using a sprinkler elements.

Advantageously, the method comprises the step of collecting the water coming from the drain and/or the water coming from cleaning box in a tank, which also includes the detached parasites.

Preferably, the method comprises the step of channelling the water to a leach out system or a second cleansing device from a parasite/water entry to a parasite/water exit in which electromagnetic pulse fields are applied using additional reflectors allowing the parasite mortality to increase before returning to the water.

According to a second aspect, the present invention refers to a device for detaching parasites that adhere to the skin of fish, characterized in that it comprises a fish/water entry channel that is connected to a cleansing device as well as a fish/water exit channel and includes a cleansing device, a set of reflectors that emit electromagnetic pulse fields that are generated from pulsating electrical currents and controlled by an electronic device, wherein the reflectors are conductive metallic elements that are connected to the electronic device through a connection means in such a manner that when the fish pass through the interior of the cleansing device, the electromagnetic pulses make contact with the parasites that are adhered to the skin and surface of the fish, resulting in the detachment of these parasites from the fish without causing measurable secondary effects on the fish.

Preferably, the electromagnetic pulse reflectors are successively located inside of the cleansing device and emit electromagnetic pulse fields inside of the cleansing device in a controlled manner.

According to an embodiment, the width and frequency of the electromagnetic pulse fields are controlled using adjustable regulators within the established range of operation, when emitted throughout the electronic device.

Advantageously, the electromagnetic pulses vary in width within a range of 0 to 10 seconds, more preferably, withing a range of 0 to 0.05 seconds and/or in a frequency ranging between 300 and 900 Hertz.

Preferably, the electromagnetic pulses vary in width within a range for detaching parasites that adhere to the skin of the fish. The electronic device is fed using an external source of electrical energy selected from the group of 220/110 volts AC or another voltage or 24/12 volts or another type of DC.

According to an embodiment, the electric power is rectified and driven to electronic cards in the electronic device, which include toroidal coil type and have the capacity of generating a magnetic field and produce power that is transmitted through electric cabling or through a connection means to the electromagnetic reflectors.

Advantageously, the cleansing device includes a ventilation zone that has a piping assembly and valve of lesser diameter from which the air that is accumulated inside the cleansing devic is released through, wherein additional water also enters the cleansing device to completely fill its interior.

More advantageously, the device comprises a means for collecting the detached parasites by using a drain to separate a portion of the water, wherein said means includes an exit channel and is generally made up of a combination of bars or tubes that are placed at a certain distance one from another, which allows only the water to be drained and not the fish.

Optionally, the drain comes in varied form and is composed of one or more stages, which makes it possible to supply the water through a sprinkler system.

For example, the drain may be connected to a cleaning box with water exit channels and water sprinkler elements.

According to a preferred embodiment, the device includes a tank that collects the drained water from the drain and/or from the cleaning box, also containing the parasites that have been detached from the fish.

According to the same embodiment, the device includes a leach out system or a second cleansing device that channels the water from the parasite/water entryway connected to the tank to a parasite/water exit way that comprises an additional connection means to power the electromagnetic pulse fields using addition reflectors that allow parasite mortality to increase before returning the water.

Advantageously, the additional reflectors connect to a cleansing device using electric cabling or additional connection means.

Preferably, the electronic device is configured such that the electromagnetic pulses are programmed to adjust the width and/or frequency for the Caligus *(Caligus Rogercresseyi)* and or the *Lepeophtheirusn* type parasites that adhere to the salmon species.

According to a third aspect the present invention refers to the use of electromagnetic pulse fields for detaching parasites that adhere to the fish, in particular, for detaching Caligus *(Caligus Rogercresseyi)* and or the *Lepeophtheirusn* type parasites that adhere to the salmon species. The width and frequency of the electromagnetic pulse fields is in a range of 0 to 0.05 seconds and in a range of 300 Hertz to 900 Hertz, respectively.

### BRIEF DESCRIPCION OF THE DRAWINGS

For a better understanding of what has been disclosed, some drawings are attached in which, diagrammatically and only as a non-limitative example, a practical embodiment is shown.

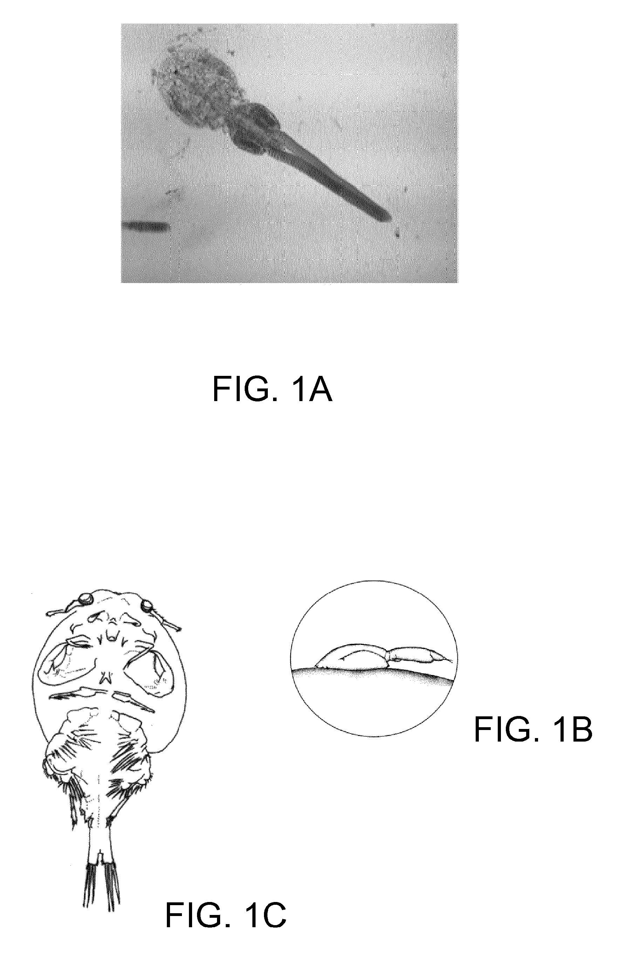

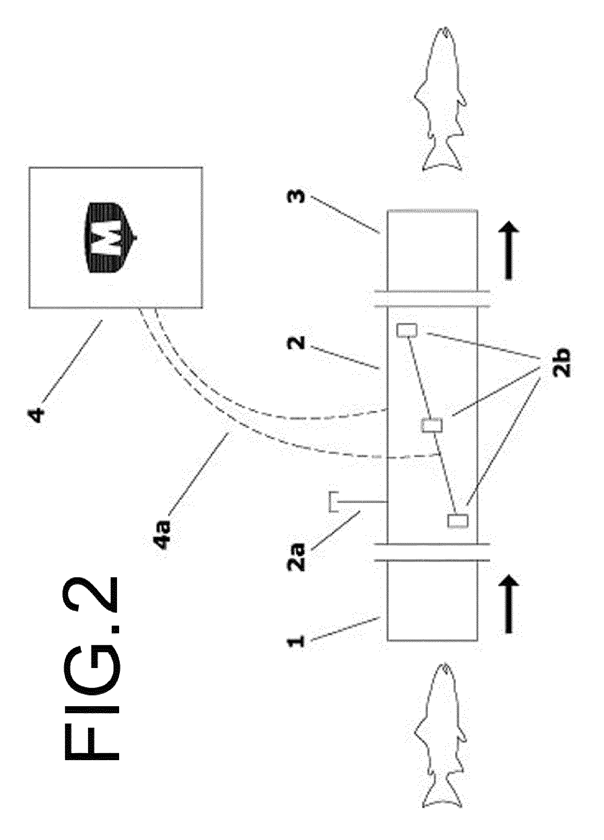

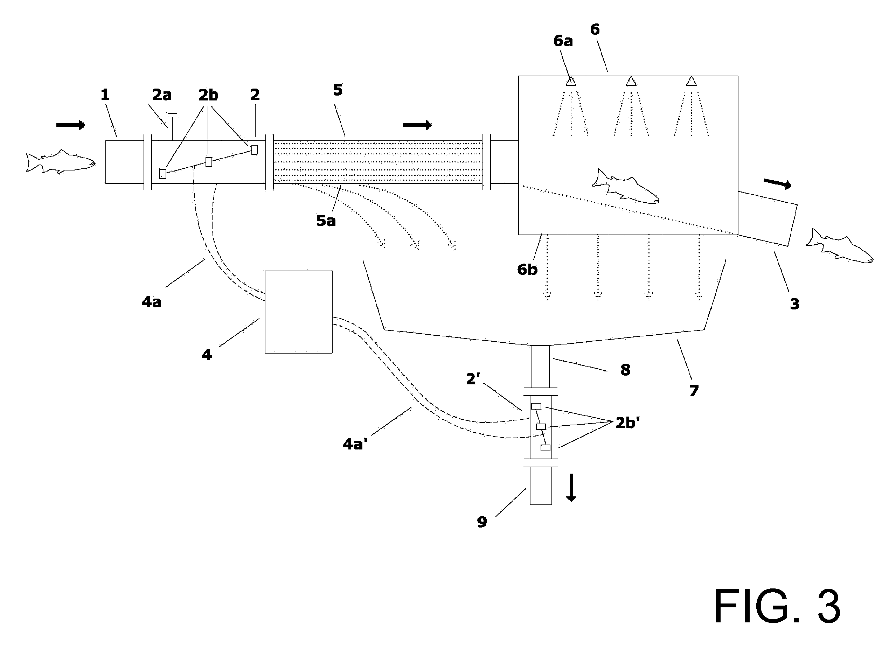

In said drawings;
➢ Figure 1A corresponds to a picture of the *Caligus Rogercresseyi.*
➢ Figure 1B corresponds to a ventral view of an adult male *Caligus Rogercresseyi* (longitude: 4,8 mm) (González & Carvajal, 1994).
➢ Figure 1C corresponds to a lateral view of a female Caligus on a fish.
➢ Figure 2 corresponds to a general diagram of the device according to a basic configuration of the present invention.
➢ Figure 3 corresponds to a diagram of the extended configuration of the device according to the preferred configuration of the present invention.

### DESCRIPTION OF A PREFERRED EMBODIMENT

The proposed method comprises the following steps:
a) Generating pulsed electric currents using an electronic device 4;
b) Transmitting such pulsed electric currents towards a set of reflectors 2b, 2b';
c) Distributing spaced apart reflectors 2b, 2b' in a dielectric device 2, 2';
d) Propagating electromagnetic pulse fields into the interior of the dielectric device 2, 2' with sets of reflectors 2b, 2b';
e) Allowing the transit of fish in a fluid medium in the interior of the dielectric device 2 from an entryway 1 to an exit 3; and
f) Exposing the fish that transit through the interior of the dielectric device 2 to an electromagnetic pulse field spread by the set of reflectors 2b in order for the electromagnetic pulses to act on and make contact with the parasites adhered on the skin and surface of the fish and thus remove the parasite.

In addition, the method comprises the following steps:
g) Controlling the spreading of the electromagnetic pulse fields by programming the width and/or frequency in ranges between 0 and 1,000 Hertz or greater, and particularly between 300 and 900 Hertz, where the width corresponds to the time of duration of each individual pulse and can be limited to a general range of 0 to 10 seconds, and more specifically from 0 to 0.05 seconds;
h) Adjusting the width and frequency of the electromagnetic pulse fields in a programmed manner and directed to the type of fish to be treated;
i) Energizing the electromagnetic pulses in the set of reflectors 2b, 2b' through a means of connection 4a, 4a' connected to the electronic device 4, which is fed by a common external electrical energy source, whether it be generated by a genset or directly from an electric network;
j) Including a vent/fill 2a in the cleansing dielectric device 2 for the purpose of releasing air buildup that may be inside the cleansing dielectric device 2, and also to introduce additional water to the cleansing dielectric device 2 to ensure that it is completely void of air and filled with water inside;
k) Collecting the parasites that have been detached from the fish using a process that allows the water to separate what has entered using a drain or strainer 5, including water outlet means 5a and in general is comprised of a combination of bars or tubes arranged with a certain distance in between, allowing to drain only the water and not the fish;
1) Arranging a drain or strainer 5 in a varied manner in one or more stages, allowing it to be utilized to supply water via sprinklers ;
m) Including a cleaning box 6, involving water outlets 6b and supplying water through sprinklers 6a;
n) Gathering the drained or strained water and/or the water coming from the cleaning box 6 in a tank 7, which will also contain the parasites that have been removed from the fish; and
o) Directing the drained water through a leach out system or a dielectric device referred to as the second cleansing dielectric device 2' from a parasite/water entry 8 to a parasite/water exit 9 in which electromagnetic pulse fields are applied using additional reflectors 2b' allowing the increase of parasite mortality before releasing the water back.

A basic device configuration of the present invention is schematically illustrated in figure 2, which includes an entry channel for the fish/water 1, connected to a dielectric device, referred to as cleansing dielectric device 2 and at the same time is connected to an exit channel for fish/water 3. The cleansing dielectric device 2 includes a series of reflectors 2b controlled by an electronic device 4 that connect to connecting means 4a.

The cleansing dielectric device 2 optionally includes a vent/fill zone 2a that includes a set of tubing and valve of lesser diameter through which the air accumulated inside of the cleansing dielectric device 2 can be released, while also allowing additional water to enter the cleansing dielectric device 2 to ensure that the interior is completely full of water.

The detachment of the parasite is achieved using the electromagnetic pulse fields created by the reflectors 2b by means of the pulsed currents coming from the electric device 4. The electric device 4 is fed by an external electrical energy source selected from the alternating current (AC) group of 220/110 volts or another voltage or 24/12 volts o another type of continuous current (DC). This electric power supply is rectified and driven to electronic cards on the electronic device 4, which includes toroidal coil type and have the capacity to generate magnetic fields and induce voltage that is transmitted through electrical wiring or through connection means 4a to the reflectors 2b of the electromagnetic pulse.

These electromagnetic pulse reflectors 2b are conductive metallic elements and are sequentially located inside the dielectric device, referred to as cleansing dielectric device 2 and allow the controlled spread of electromagnetic pulse fields in the interior of the device. The electromagnetic pulse fields are generated in a programmed fashion by the reflectors 2b by means of the pulsating electric currents coming from the electric device 4, which allow the width and frequency regulation of the emission of the pulse fields. The electronic device 4 also incorporates adjustable resistors that allow the user to adjust the parameters within the established range of operation.

With the basic configuration of the device, the fish are driven in their habitual fluid medium to the fish/water entry passage 1 to be treated when they circulate through the interior of the cleansing dielectric device 2, which is a dielectric device. After the fish have been treated, they leave through the fish/water exit channel 3. Inside the cleansing dielectric device 2, the fish will interact within close proximity with the electromagnetic pulses sent by the set of reflectors 2b. As a result, the electromagnetic pulses make contact with the parasites adhered to the fishes skin and fish surface, resulting in the detachment of the parasites.

The ability to control the frequency and width of the electromagnetic pulse produces an adverse effect on the parasites without generating measurable secondary consequences on the fish being treated. The electromagnetic pulses vary in frequency ranges between 0 and 1,000 Hertz or greater and more particularly between 300 and 900 Hertz, while the width relates to the duration time of each individual pulse and can be limited to a general range of 0 to 10 seconds and more particularly from 0 to 0.05 seconds.

Figure 3 illustrates an extended device configuration of the present invention, which includes the fish/water entryway 1, connected to a cleansing dielectric device 2, which is referred to as dielectric device and is connected to a medium that collects the detached parasites using a drain or strainer 5 to separate the incoming water, which includes a water outlet 5a and is formed by a combination of bars and tubes placed at a certain distance from one another, allowing only the water to be drained and not the fish, which is ultimately connected to the fish/water exit way 3.

The drain or strainer 5 varies in form and involves one or more stages, one of which includes the connection to a cleaning box 6 that has water outlets 6band supplies water through sprinklers 6a. This cleaning box 6 is connected to a fish/water exit channel 3.

The electronic device 4 controls the cleansing dielectric device 2, which includes a vent/fill 2a and a set of reflectors 2b. These devices are connected through a connecting means 4a.

The water discharge and the detached parasites that come from the drained water exit way 5a as well as the cleaning box 6 water outlets (6b) land in a tank (7). The tank 7 is connected to a parasite/water entry channel (8), which is connected to a second dielectric device 2' referred to as the second cleansing dielectric device, and is connected to a second parasite/water exit channel 9. The second cleansing device 2' includes a set of additional reflectors 2b' that are controlled by the electronic device (4), which are connected using an additional connection means 4a'.

The fish to be treated with this extended device configuration are directed in their habitual fluid through the fish/water entry channel 1 in order to be treated once they advance to the interior of the cleansing dielectric device 2. Once they have been treated they go through the drain 5, where a portion part of the water coming from the fish/water entry channel 1 and containing the detached parasites, is eliminated. The fish then continue through the cleaning box 6, where the water sprinklers 6a shower and clean the fish and where the water that contains the detached parasites is eliminated and the fish treated exit through the fish/water outlet 3. In the interior of the cleansing dielectric device 2, the fish interact in close proximity with the electromagnetic pulses that are emitted by the set of reflectors 2b. As a result, the electromagnetic pulses make contact with the parasites that are adhered to the skin or surface of the fish, removing the parasites.

The ability to control the frequency and width of the electromagnetic pulses causes an adverse effect on the parasites without producing measurable side effects on the fish being treated.

The parasites that are detached from the fish being treated are accumulated in the tank 7 and conducted to the interior of the second cleansing dielectric device 2', where additional reflectors emit electromagnetic pulses 2b' at a controlled width and frequency that kills the parasites.

### Summary of experimental tests

During the month of June of 2013, sets of private tests were conducted using the proposed method for the treatment of Caligus on salmon species.
The initial stage of the treatment requires the application of an "electromagnetic barrier or transient", that at a determined intensity, causes the detachment of the Caligus from its hosts, without affecting the fish being treated.

### Methodology:

The testing consisted in:
- Conducting a normal launch of fish;
- Measuring the amount of Caligus present in the launch of fish before treatment;
- Simultaneously applying the treatment on suction line and not on the other in order to compare the results achieved;
- Separately unloading the fish and sampling the amount of Caligus present posttreatment and post-handling;
- Revising the effects of treatment in the Caligus that remained on the fish.

### Results:

Caligus Equipment Testing
Center = Pololcura (S. Multiexport)
Wellboat = Orca Ona
Pen = 111
Species = Trout
Weekly Mortality = 4 %

| Launch 1 | N° Fish | Wx (kg) |
|---|---|---|
| Start Time = 12:56 | C1 = 367 (Treatment) | 1.675 |
| End Time = 13:02 | C2 = 298 (Control) | 1.738 |

Haul or launch Time = 05:22 min.
Pen *O*₂ = mg/L ; Center *O*₂ = 9.2 mg/L
T° = 12.2 °C

### Statistical Results:

Sampling on Launch Pre - Treatment = 17.6 Caligus (average per fish)
Post Handling sampling + Treatment = 7.2 Caligus (average per fish)

### Examination of Status of Remaining Caligus:

Neutral Red staining was used
As a result, it was found that the remaining Caligus were alive

### Conclusions:

According to the obtained results it was found that:
The Caligus (average per fish) was diminished by 59% with the treatment.
In terms of fish treatment, no adverse effects were observed post launch;;
In terms of the treatment effects on the remaining Caligus, no negative effects were observed on the fish. 41% of Caligus remained on the fish.
The basic system used shows the desired results.

## Claims

1. Method for detaching parasites that adhere to the skin of fish **characterized in that** it comprises the steps of:
a. Generating pulsating electric currents using an electronic device (4);
b. Transmitting the pulsating electric currents towards aset of reflectors (2b);
c. Sparsely distributing the reflectors (2b) in a cleansing device (2);
d. Spreading electromagnetic pulse fields in the interior of the cleansing device (2) with a set of reflectors (2b);
e. Allowing the transfer of fish in a fluid medium to the interior of the cleansing device (2) from a fish/water entrance (1) to a fish/water exit (3); and
f. Exposing the fish that transit through the interior of the cleansing device (2) to the electromagnetic pulses emitted by the set of reflectors (2b) in order for the electromagnetic pulses to act upon the parasites adhered to the skin and surface of the fish and generate the detachment of the parasites from the fish.

2. Method for detaching parasites that adhere to the skin of fish in accordance with claim 1, **characterized in that** it comprises the step of controlling the spread of electromagnetic pulse fields by programming its width and frequency.

3. Method for detaching parasites that adhere to the skin of fish in accordance with claim 2, **characterized in that** it comprises the step of controlling the width of the electromagnetic pulses in a range from 0 to 10 seconds and/or the control of the electromagnetic pulses in ranges between 0 and 1,000 Hertz or greater.

4. Method for detaching parasites that adhere to the skin of fish in accordance with claim 3, **characterized in that** it comprise the step of controlling the width of the electromagnetic pulse fields in a range from 0 to 0.05 second and/or a control over the frequency of electromagnetic pulses in ranges between 300 and 900 Hertz.

5. Method for detaching parasites that adhere to the skin of fish in accordance with anyone of claims 2 through 4, **characterized in that** it comprises the step of adjusting the width and/or frequency of the electromagnetic pulses in a programmed manner and directed to the Caligus type parasites (*Caligus Rogercreseyi*) and/or the *Lepeophtheirus* type parasites that adheres to the salmon species.

6. Method for detaching parasites that adhere to the skin of fish in accordance with anyone of claims 1 through 5, **characterized in that** it comprises the step of energizing the electromagnetic pulse fields in the set of reflectors (2b) using a connection medium (4a), which is connected to an electronic device (4) and also powers the electromagnetic pulse fields in the additional set of reflectors (2b') through an additional connection means (4a') connected to the electronic device (4).

7. Method for detaching parasites that adhere to the skin of fish in accordance with claim 1, **characterized in that** the electronic device (4) is fed by an external power source.

8. Method for detaching parasites that adhere to the skin of fish in accordance with claim 1, **characterized in that** it comprises the step of releasing through a ventilation zone (2a) the buildup of air (airbag) that sets inside the cleansing device (2) and also allowing additional water to enter the cleansing device (2) to guarantee that the interior of the device is full of water.

9. Method for detaching parasites that adhere to the skin of fish in accordance with claim 1, **characterized in that** it comprises the step of collecting the detached parasites using a tool that allows to separate the incoming water using a drain (5) with water exit channels (5a).

10. Method for detaching parasites that adhere to the skin of fish in accordance with claim 9, **characterized in that** it comprises the step of draining the incoming water in one or more stages as well as the step of supplying of water through a sprinkler system (6a).

11. Method for detaching parasites that adhere to the skin of fish in accordance with claim 10, **characterized in that** the draining stage comprises passing the water through a cleaning box (6), which contains water exit channels (6b), and the step of supplying of water using a sprinkler elements (6a).

12. Method for detaching parasites that adhere to the skin of fish in accordance with claims 9 through 11, **characterized in that** it comprises the step of collecting the drained water (5) and/or the water coming from the cleaning box (6) in a tank (7), which also includes the detached parasites.

13. Method for detaching parasites that adhere to the skin of fish in accordance with anyone of claims 9 through 12, **characterized in that** it comprises the step of channelling the water to a leach out system or a second cleansing device (2') from a parasite/water entry (8) to a parasite/water exit (9) in which electromagnetic pulse fields are applied using additional reflectors (2b') allowing the parasite mortality to increase before returning to the water.

14. Device for detaching parasites that adhere to the skin of fish, **characterized in that** it comprises a fish/water entry channel (1) that is connected to a cleansing device (2) as well as a fish/water exit channel (3) and includes a cleansing device (2), a set of reflectors (2b) that emit electromagnetic pulse fields that are generated from pulsating electrical currents and controlled by an electronic device (4), wherein the reflectors (2b) are conductive metallic elements that are connected to the electronic device (4) through a connection means (4a) in such a manner that when the fish pass through the interior of the cleansing device (2), the electromagnetic pulses make contact with the parasites that are adhered to the skin and surface of the fish, resulting in the detachment of these parasites from the fish without causing measurable secondary effects on the fish.

15. Device for detaching parasites that adhere to the skin of fish in accordance with claim 14, **characterized in that** the electromagnetic pulse reflectors (2b) are successively located inside of the cleansing device (2) and emit electromagnetic pulse fields inside of the cleansing device (2) in a controlled manner.

16. Device for detaching parasites that adhere to the skin of fish in accordance with claims 14 or 15, **characterized in that** the width and frequency of the electromagnetic pulse fields are controlled using adjustable regulators within the established range of operation, when emitted throughout the electronic device (4).

17. Device for detaching parasites that adhere to the skin of fish in accordance with claim 16, **characterized in that** the electromagnetic pulses vary in width within a range of 0 to 10 seconds and/or in frequency ranging between 0 and 1,000 Hertz or greater.

18. Device for detaching parasites that adhere to the skin of fish in accordance with claim 17, **characterized in that** the electromagnetic pulses vary in width within a range of 0 to 0.05 seconds and/or in a frequency ranging between 300 and 900 Hertz.

19. Device for detaching parasites that adhere to the skin of fish in accordance with claim 14, **characterized in that** the electronic device (4) is fed using an external source of electrical energy selected from the group of 220/110 volts AC or another voltage or 24/12 volts or another type of DC.

20. Device for detaching parasites that adhere to the skin of fish in accordance with claim 19, **characterized in that** the electric power is rectified and driven to electronic cards in the electronic device (4), which include toroidal coil type and have the capacity of generating a magnetic field and produce power that is transmitted through electric cabling or through a connection means (4a) to the electromagnetic reflectors (2b).

21. Device for detaching parasites that adhere to the skin of fish in accordance with claim 14, **characterized in that** the cleansing device (2) includes a ventilation zone (2a) that has a piping assembly and valve of lesser diameter from which the air that is accumulated inside the cleansing device (2) is released through, wherein additional water also enters the cleansing device (2) to completely fill its interior.

22. Device for detaching parasites that adhere to the skin of fish in accordance with claim 14, **characterized in that** it comprises a means for collecting the detached parasites by using a drain (5) to separate a portion of the water, wherein said means includes an exit channel (5a) and is generally made up of a combination of bars or tubes that are placed at a certain distance one from another, which allows only the water to be drained and not the fish.

23. Device for detaching parasites that adhere to the skin of fish in accordance with claim 22, **characterized in that** the drain (5) comes in varied form and is composed of one or more stages, which makes it possible to supply the water through a sprinkler system.

24. Device for detaching parasites that adhere to the skin of fish in accordance with claim 23, **characterized in that** the drain (5) is connected to a cleaning box (6) with water exit channels (6b) and water sprinkler elements (6a).

25. Device for detaching parasites that adhere to the skin of fish in accordance with anyone of claims 22 through 24, **characterized in that** it includes a tank (7) that collects the drained water from the drain (5) and/or from the cleaning box (6), also containing the parasites that have been detached from the fish.

26. Device for detaching parasites that adhere to the skin of fish in accordance with claims 22 through 25, **characterized in that** it includes a leach out system or a second cleansing device (2') that channels the water from the parasite/water entryway (8) connected to the tank (7) to a parasite/water exit way (9) that comprises an additional connection means (4a') to power the electromagnetic pulse fields using addition reflectors (2b') that allow parasite mortality to increase before returning the water.

27. Device for detaching parasites that adhere to the skin of fish in accordance with claim 26, **characterized in that** the additional reflectors (2b') connect to a cleansing device (4) using electric cabling or additional connection means (4a').

28. Device for detaching parasites that adhere to the skin of fish in accordance with anyone of claims 22 through 27, **characterized in that** the electronic device (4) is configured such that the electromagnetic pulses can be programmed to adjust the width and/or frequency for the Caligus *(Caligus Rogercresseyi)* and or the *Lepeophtheirusn* type parasites that adehere to the salmon species.

29. Use of electromagnetic pulse fields for detaching parasites that adhere to the fish, in particular, for detaching Caligus *(Caligus Rogercresseyi)* and or the *Lepeophtheirusn* type parasites that adhere to the salmon species.

30. Use of electromagnetic pulse fields according to claim 29, wherein the width and frequency of the electromagnetic pulse fields is in a range of 0 to 0.05 seconds and in a range of 300 Hertz to 900 Hertz, respectively.
